Europäisches Patentamt

(19) European Patent Office

Office européen des brevets

(11) Publication number: **0 100 354**
**B1**

# (12) EUROPEAN PATENT SPECIFICATION

(45) Date of publication of patent specification: **10.08.88**

(21) Application number: **83900880.2**

(22) Date of filing: **01.02.83**

(86) International application number:
**PCT/US83/00144**

(87) International publication number:
**WO 83/02673 04.08.83 Gazette 83/18**

(51) Int. Cl.⁴: **G 02 B 27/58, G 02 F 1/29**

## (54) METHOD AND MEANS OF BEAM APODIZATION.

(30) Priority: **01.02.82 US 344526**

(43) Date of publication of application:
**15.02.84 Bulletin 84/07**

(45) Publication of the grant of the patent:
**10.08.88 Bulletin 88/32**

(84) Designated Contracting States:
**AT BE CH DE FR GB LI LU NL SE**

(56) References cited:
**US-A-2 975 668**
**US-A-3 040 625**
**US-A-3 226 721**
**US-A-3 378 687**
**US-A-3 499 701**
**US-A-3 504 979**
**US-A-3 651 256**
**US-A-4 034 949**
**US-A-4 128 297**

(73) Proprietor: **SOUTHERN CALIFORNIA EDISON COMPANY**
**2244 Walnut Grove Avenue**
**Rosemead California 91770 (US)**

(72) Inventor: **LEE, Paul H.**
**6877 Del Playa Drive**
**Goleta, CA 93017 (US)**

(74) Representative: **Harrison, David Christopher et al**
**MEWBURN ELLIS & CO 2/3 Cursitor Street**
**London EC4A 1BQ (GB)**

(56) References cited:
**REVIEW OF SCIENTIFIC INSTRUMENTS, vol. 43, no. 1, January 1972 R.TURNER et al.: "A mechanical device for controlling the radial intensity distribution of a light beam", pages 137-139**
**LASER FOCUS, vol. 15, no. 11, November 1979, NEWTON (US), S.L. REAM : "A convex beam integrator", pages 68-71**

EP 0 100 354 B1

Courier Press, Leamington Spa, England.

**Description**

This invention relates to apodizing beams which have a symmetry about their maximum intensity point, such as a Gaussian beam, or a beam having a peak with a maximum intensity having additionally symmetries about their points of inflection. In particular the invention is directed to scanning laser beams in such a way that there is time-averaged apodization over a circular area in the far field.

A laser beam typically has a Gaussian distribution as its intensity profile. That is, if the intensity, I, were plotted against the distance from the center of the beam, y, that function takes the form of the expression $I=I_o e^{-by2}$ where the constant Io defines the intensity on the beam axis, and the constant, b, defines the beam width. The expression is exact both close to the laser which in the art is termed "the near field" and far away from the laser which in the art is termed "the far field". In the near field, the constant, b, is a linear measure usually given in millimeters. In the far field, the constant b, is an angular measure normally given in milliradians.

When such a beam is apodized, deliberate steps are taken to flatten this Gaussian intensity profile distribution, namely, to make the intensity, I, a constant independent of position in the beam, y. The constant intensity distribution should prevail for some useful distance away from the beam axis.

In the prior art, apodization is most often done in the near field by placing a graded radially symmetrical filter in the beam. The filter is appropriately designed to absorb more strongly at the center than at the edges. The beam immediately beyond the filter then has the desired flat intensity profile, but undesirably it is much weaker than before. The filter is usually also expensive and difficult to make to the required absorption and optical wave-front tolerances, and it can also be deteriorated by the laser beam intensity. Finally, diffraction effects at the beam edges will cause the intensity in the far field much beyond the filter to revert again to a non-flat distribution.

Such absorption apodization also wastes the light energy and deteriorates the laser light intensity.

Scanning a beam with the Gaussian profile is the rotation of the beam about an axis, and symmetrical scanning about the central beam axis produces no change in the intensity profile anywhere along the beam. In fields dealing with beams of electromagnetic radiation, namely the radar, infrared and laser field, scanning of the beams has been effected to create different objectives all totally unrelated to apodization.

In U.S. Patent 3,226,721 (Gould) there is disclosed a plurality of optical scanning devices that utilize a rotating tube which have various internal optical elements such as lenses and prisms to effect a raster scan or a conical scan. Thereby Gould, which is like an antenna, is able to locate a target or object within a desired field of view. Gould provides a radar pointing effect, which causes a sharp angle of intersection between rotating lobes of the radar beam, which is usually non-Guassian.

In U.S. Patent 2,975,668 (Eckel) there is disclosed a scanning device with a rotating tube which effectively is no more than a periscope to change the field of view.

U.S. Patent 4,034,949 (Hoesterey) discloses an optical tracking system where the lens defines an optical axis for use with infra red telescopes for sensing the flight path of a rocket or missile by tracking heat-radiating portions of a missile. The optical-mechanical means provides a nutation of received radiation energy so as to trace a circular image upon a detected array about the optical axis. Once again this does not relate to apodizing a Gaussian beam, but rather targeting or pointing.

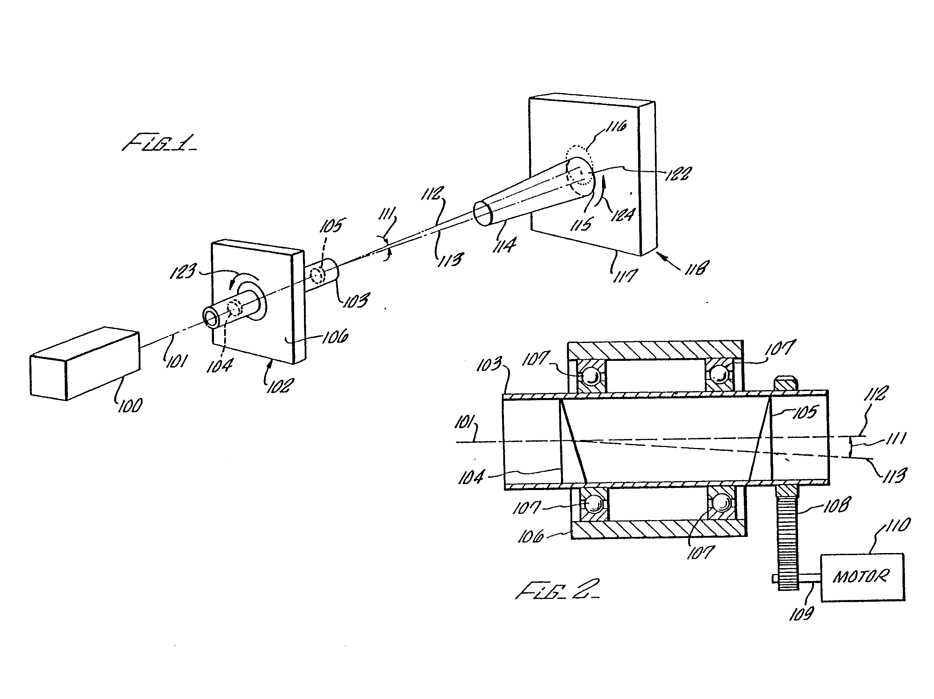

S. L. Ream "Laser Focus", November 1979, discusses means for focusing or intergrating laser-generated beams in the near field, for hardening of steels etc. In Figure 1 B he shows a proposal for generating a square or rectangular pattern of intense radiation by mutually orthogonal rapid movement of reciprocable mirrors.

In US—A—3,378,687 there is seen a double-prism system which may be rotated to detect the origin of light, to be studied in a telescope or the like, from within a conical envelope.

Thus in the prior art there does not exist the method or means for scanning a Gaussian beam of electromagnetic radiation to effect at least substantial time-averaged apodization. Where such scanning is effected in a transmitter of such radiation, it can enhance the radiation beam pointing.

According to the invention, apodization in the far field is effected by deflecting the beam by a small angle to the original central beam axis and rotating the central axis of the deflected beam about the original axis so that the peak intensity at the centre of the originating laser beam traces out a cone in space and provides a time-averaged apodization over a circular area in the far field. Except for the direction along the axis of conical rotation, a point at any other direction illuminated by scanning the beam shows a periodic fluctuation intensity. The momentary intensity is a maximum when the beam points closest to such point and a minimum when it points farthest away from such point.

It is possible to obtain a uniform time-averaged intensity over the circular area where the intensity profile is flattened.

An over-apodization, which is also possible within the invention, provides a profile along the original central axis that is reduced to a trough so that a low point is reached where sensitivity to variation of the inensity is maximized.

The time-averaged intensity of the beam is obtained by averaging the intensity over at least one rotation.

In the drawings

Figure 1 is a diagrammatic view illustrating a conical scan of a laser beam of Guassian profile.

Figure 2 is a detailed diagrammatic view of a conical scan mechanism to effect scanning of the beam.

Figure 3 shows representative contours indicating the normalised intensity for a laser beam of Guassian shape representative of a cross-section through a typical laser beam in the far field.

Figure 4 is an apodized beam profile in the far field of a laser beam plotted with a normalized time averaged intensity as a function of distance measured perpendicularly to the conical scan axis.

Apparatus for scanning a Gaussian electromagnetic beam of electromagnetic radiation includes a laser source 100 to project a laser beam 101 through a conical scan mechanism 102. The mechanism includes a rotating housing 103 which has a pair of wedge prisms 104 and 105 mounted in the housing axially spaced apart from each other on the longitudinal axis of the housing 103.

The detailed diagrammatic view of the housing 103 shows a support 106 having bearing means 107 so that the housing 103 can rotate therein. The rotating housing 103 is driven by motorized means which has a gear system 108 connected to the output shaft 109 of a motor 110.

The prisms 104 and 105 are relatively rotatable to each other in the housing and, after this is effected as desired locking screws set the prisms 104 and 105 in a position at a selected radial angle relative to each other. With the prisms 104 and 105 so locked there is requisite deflection of the laser beam 101 as indicated by the angle 111 between the non-deflected central axis 112 of the laser beam 101 and the central axis 113 of the deflected laser beam.

Such deflected laser beam would transcribe a conical shape as illustrated by the diverging cone 114 which over a scan cycle transcribes a circle 115.

The peak of the Gaussian beam in its conical scan about the beam's non-deflected i.e. original axis 112 traces a circle depicted by dotted lines 116.

The two circles 115 and 116 are illustrated in the far field as being on the plane 117 of a retroreflector 118.

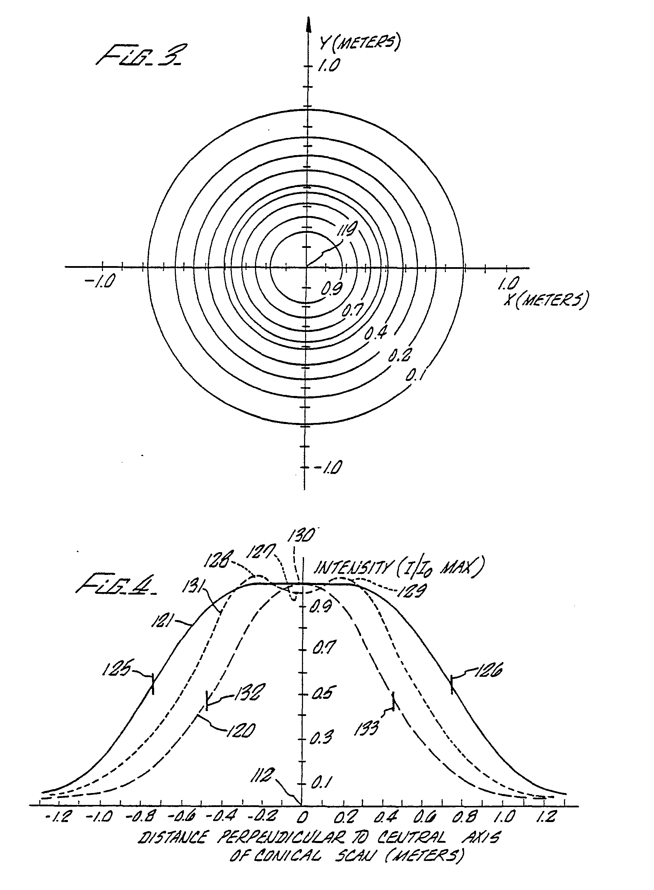

In Figure 3 there is described in the far field at approximately 1.5 kilometers from the laser source 100 the contours of normalized intensity (I/Io) for the laser beam 101 of Gaussian shape. The contour interval equal 0.1 units and the beam axis which would be of the non-deflected laser beam is directed through the intersection of the x and y axes at the origin. This point would be equivalent to the central axis 119 point of intersection on the retroreflector 118. The x and y axes represent distances measured in meters perpendicular to the axis 112. The concentration of the contour lines between the normalized values of 0.4 and 0.7 are representative of the Gaussian distribution as depicted by the formula $e^{-by^2}$.

Comparatively in Figure 4 the profile at the retroreflector 118 positioned at a far field distance of approximately 1.5 kilometers from the laser source 100 is shown. The normalized time averaged intensity is plotted as a function of distance perpendicular to the central axis 112 shown in Figure 1. The preferred averaging time is greater than 10 scan cycles, and for comparison purposes a normalized Gaussian distribution curve is shown as dashed curve 120. The apodized curve is depicted as curve 121. The effective operative width of the curve is illustrated between points 125 and 126. The beam so apodized shows substantially only low loss of intensity substantially adjacent the original central beam axis 112.

By the conical scan of the laser beam 101 the time-averaged value of the periodically varying illumination off the axis 112 has been found to be remarkably near equal to the constant illumination on the axis 113 at the far field where the long path length is between about 1.5 to 2 kilometers.

The conical scan mechanism 102 is shown as a mechanical device, with a pair of wedge prisms 104 and 105. To increase the speed of conical scanning it is possible to scan the beam electronically without using moving parts. Alternatively where time is not essential moving mirrors could form the equivalent function of the rotating wedge prisms 104 and 105.

The reference point 122 on the retroreflector 118 is randomly selected to illustrate the invention, and at that point 122 the intensity will fluctuate periodically. It will be maximum when the laser beam as illustrated by cone 114 points closest to 112 and minimum when the laser beam 114 points farthest away from 112. The time-average value of the periodically varying intensity off the scan axis at 122 can be made nearly equal to the intensity sensed on the axis by properly selecting the scanning angle 111. In other words, the time-average beam profile can be shaped to be remarkably flat in the vicinity of the distant retro-reflector 118.

The direction of scan as effected by the conical scan mechanism 102 is indicated by arrows 123 on the diagrammatic conical scan mechanism 102 and also by the arrow 124 on the retroreflector 118.

When using the time-averaged apodized laser beam 101 in the far field, a transmissometer application can be obtained. This transmissometer application is more fully described in EP—A—83 907 004.8. Contents of that application are incorporated by reference herein.

Another possibility is that the distribution is over-apodized as in curve 131 so as to provide a low intensity trough 127 between two peaks 128 and 129 which are shown in the dotted profile in Figure 4. At the low intensity trough point 127 there will be a maximized sensitivity to the position of the apodized laser beam. This application is effective to enhance the measurement of beam pointing or relative position movement change between a selected generating point associated with the laser source 100 and a selected beam receiving point associated with a reflector 118. Further details of this application are disclosed in the co-pending application aforementioned, which includes sensitive detection of earth movement.

In cases where it is necessary for the information contained within the laser beam to be transmitted rapidly the mechanical conical scan monitoring system 102 may be replaced by electronic scanning which effects scanning rapidly without the use of moving parts.

The apparatus and method according to the invention has substantial improvements over apodizing methods and means for apodized beams which are currently known and as such provides a highly effective beam with low loss of intensity for useful applications, some of which have been mentioned.

In other embodiments of the invention the beam 101 may be some other form of light which may or may not be monochromatic. The beam should have a symmetry either about its maximum intensity point 130, in the Gaussian profile described. Alternatively, there should be a symmetry about the points of inflection and the maximum intensity in a non-Gaussian beam. In an example of Gaussian curve 120 the points 132 and 133 are the points of inflection, namely where the curvature of the profile changes from concave upwards to concave downwards.

## Claims

1. A method of apodizing a laser-generated beam (101), said beam having a central axis (112) and having an intensity cross sectional profile (120) which is substantially symmetrical about the maximum intensity point and has points of inflection (132, 133) characterized by directing the beam into scanning means (102) which deflect the beam by a small angle (111) from its original central axis (112) and rotate the central axis (113) of the deflected beam about the original central axis (112) to produce a conical scanned beam at a far field distance (117) from the scanning means, thus providing time-average apodization over a circular area at the far field distance.

2. A method according to Claim 1 wherein scanning is effected by passing through the beam through wedge prisms (104, 105) rotatable about an axis substantially coincidental with the original central axis (112) of the beam (101) entering the scanning means (102).

3. A method according to Claim 2, wherein the wedge prisms (104, 105) are rotated relative to each other about the said axis until a selected angle (111) between the original and the deflected central axis is obtained and the prisms are thereafter fixed with respect to each other during the rotation of the beam.

4. A method according to any one of Claims 1 to 3 wherein the beam (101) as generated has a substantially Gaussian cross sectional intensity profile (120).

5. A method according to any one of the preceding claims wherein the beam scan is substantially equal to the beam width.

6. A method according to any one of the preceding claims wherein there is a target (118) at the far distance, the apodization including forming peaks (128, 129) at each side of the original central axis (112) whereby to maximize the sensitivity of the target to the position of the beam.

7. An apparatus for apodizing a laser-generated beam (101), said beam having an intensity cross sectional profile (120) which is substantially symmetrical about the maximum intensity points (130) and has points of inflection (132, 133) and having a central axis (112) characterized by a housing (103) having a longitudinal axis, the beam (101) entering through one end of the housing substantially along the longitudinal axis and exiting through the opposite end of the housing, and by substantially wedge-like prisms (104, 105) being mounted within the housing and being rotatable about the longitudinal axis to deflect the beam, whereby on rotation of the prisms about the longitudinal axis, the beam is conically scanned about the said central axis (112), the output beam being scanned to have a substantially uniform time-averaged apodized intensity at a far field distance.

8. An apparatus according to Claim 7 wherein the prisms are rotatably adjustable relative to each other to adjust the angle (111) of deflection of the beam.

## Patentansprüche

1. Verfahren zum Apodisieren eines mittels Laser erzeugten Strahls (101), welcher Strahl eine zentrale Achse (112) und ein Intensitäts-Querschnittprofil (120) aufweist, das im wesentlichen symmetrisch um den Punkt der maximalen Intensität ist und Wendepunkte (132, 133) besitzt, dadurch gekennzeichnet, daß der Strahl in eine Scan- bzw. Ablenkeinrichtung (102) gerichtet wird, die den Strahl um einen kleinen Winkel (111) von seiner ursprünglichen zentralen Achse (112) ablenkt und die zentrale Achse (113) des abgelenkten Strahls um die ursprüngliche zentrale Achse (112) herum rotiert, um einen konischen abtastenden bzw. gescannten Strahl im Fernfeldabstand (117) von der Abtasteinrichtung zu erzeugen und damit eine zeitlich gemittelte Apodisierung über einen kreisförmigen Bereich im Fernfeldabschnitt zu schaffen.

2. Verfahren nach Anspruch 1, worin das Ablenken bzw. Scannern bewirkt wird, indem der Strahl durch Keilprismen (104, 105) geleitet wird, die drehbar um eine Achse sind, die im wesentlichen mit der ursprünglichen zentralen Achse (112) des Strahls (101) zusammenfällt, der in die Scan- bzw. Ablenkeinrichtung (102) eintritt.

3. Verfahren nach Anspruch 2, worin die Keilprismen (104, 105) in bezug aufeinander um die genannte Achse rotiert werden, bis ein ausgewählter bzw. vorgegebener Winkel (111) zwischen der ursprünglichen und der abgelenkten zentralen Achse erhalten wird und daß die Prismen daraufhin in bezug zueinander während der Rotation des Strahls festgestellt werden.

4. Verfahren nach einem der Ansprüche 1 bis 3, worin der erzeugte Strahl (101) ein im wesentlichen Gaußsches Intensitätsquerschnittprofil (120) aufweist.

5. Verfahren nach einem der vorhergehenden Ansprüche, worin die Strahlblenkung im wesentlichen gleich der Strahlbreite ist.

6. Verfahren nach einem der vorhergehenden Ansprüche, worin ein Ziel (118) in weiter Entfernung vorhanden ist und die Apodisierung die Bildung von Spitzen (128, 129) auf beiden Seiten der ursprünglichen zentralen Achse (112) umfaßt, um die Empfindlichkeit des Zieles bezüglich der Position des Strahls auf ein Maximum zu bringen.

7. Vorrichtung zum Apodisieren eines mittels Laser erzeugten Strahls (101), welcher Stahl ein Intensitätsquerschnittprofil (120) aufweist, das im wesentlichen symmetrisch um die Punkte (130) der maximalen Intensität ist, Wendepunkte (132, 133) und eine zentrale Achse (112) aufweist, gekennzeichnet durch ein Gehäuse (103) mit einer Längsachse, wobei der Strahl (101) durch ein Ende des Gehäuses im wesentlichen entlang der Längsachse eintritt und durch das gegenüberliegende Ende des Gehäuses austritt, und durch im wesentlichen keilförmige Prismen (104, 105), die innerhalb des Gehäuses montiert und um die Längsachse drehbar sind, um den Strahl abzulenken, wodurch bei Rotation der Prismen um die Längsachse der Strahl um die genannte zentrale Achse (112) herum konisch abgelenkt wird und der Ausgangsstrahl abgelenkt wird, um eine im wesentlichen gleichmäßige, zeitlich gemittelte apodisierte Intensität in einer dem Fernfeld entsprechenden Entfernung aufzuweisen.

8. Vorrichtung nach Anspruch 7, worin die Prismen durch Verdrehen relativ zueinander einstellbar sind, um den Ablenkungswinkel (111) des Strahls einzustellen.

**Revendications**

1. Procédé d'apodisation d'un faisceau créé par laser (101), ledit faisceau ayant un axe central (112) et un profil d'intensité en coupe transversale (120) qui est essentiellement symétrique autour du point d'intensité maximale et qui présente des points d'inflexion (132, 133), caractérisé par le fait que le faisceau est envoyé dans un dispositif de balayage (102) qui dévie le faisceau suivant un petit angle (111) par rapport à l'axe central original (112) et qui fait tourner l'axe central (113) du faisceau dévié autour de l'axe central original (112), afin d'obtenir un faisceau de balayage conique à une distance (117) par rapport au dispositif de balayage qui est celle du champ éloigné afin de réaliser ainsi une apodisation moyenne dans le temps sur une zone circulaire à la distance du champ éloigné.

2. Procédé selon la revendication 1, dans lequel le balayage est réalisé en faisant passer le faisceau à travers des prismes cunéiformes (104, 105) pouvant tourner autour d'un axe qui coïncide essentiellement avec l'axe central original (112) du faisceau (101) pénétrant dans le dispositif de balayage (102).

3. Procédé selon la revendication 2, dans lequel les prismes cunéiformes (104, 105) sont tournés l'un par rapport à l'autre autour du dit axe jusqu'à ce que l'on obtienne un angle choisi (111) entre l'axe original et l'axe central dévié, ces prismes étant ensuite fixés l'un par rapport à l'autre au cours de la rotation du faisceau.

4. Procédé selon l'une des revendications 1 à 3, dans lequel le faisceau (101) est créé avec un profil d'intensité en coupe transversale (120) qui a une distribution essentiellement gaussienne.

5. Procédé selon l'une des revendications précédentes, dans lequel la largeur du balayage du faisceau est essentiellement égale à la largeur du faisceau.

6. Procédé selon l'une des revendications précédentes, dans lequel il existe une cible (118) à la distance éloignée, l'apodisation comprenant la création de pics (128, 129) de part et d'autre de l'axe central original (112), afin de maximiser la sensibilité de la cible à la position du faisceau.

7. Appareil pour réaliser l'apodisation d'un faisceau créé par laser (101), ledit faisceau ayant un profil d'intensité en coupe transversale (120) qui est essentiellement symétrique par rapport au point d'intensité maximale (130) et qui possède des points d'inflexion (132, 133) et un axe central (112), caractérisé par un logement (103) ayant un axe longitudinal, le faisceau (101) pénétrant par une extrémité du logement essentiellement suivant l'axe longitudinal et sortant par l'extrémité opposée du logement et des prismes, essentiellement en forme de coins (104, 105), étant montés dans le logement et pouvant tourner autour de l'axe longitudinal afin de dévier le faisceau tandis que, lorsque ces prismes tournent autour de l'axe longitudinal, le faisceau subit un balayage conique autour de cet axe central (112), le faisceau de sortie étant balayé de manière à présenter une intensité essentiellement uniforme avec apodisation moyenne dans le temps à la distance du champ éloigné.

8. Appareil selon la revendication 7, dans lequel les prismes peuvent être ajustés par rotation l'un par rapport à l'autre, afin de régler l'angle (111) de dérivation du faisceau.

0 100 354

FIG.1

FIG.2

MOTOR

1

Fig. 3.

Y (METERS)

X (METERS)

Fig. 4.

INTENSITY ($I/I_0$ MAX)

DISTANCE PERPENDICULAR TO CENTRAL AXIS
OF CONICAL SCAN (METERS)